# EUROPEAN PATENT SPECIFICATION

(11) **EP 3 786 743 B1**
(45) Date of publication and mention of the grant of the patent: **09.08.2023**
(21) Application number: 20203619.0
(22) Date of filing: 12.03.2012
(51) Int. Cl.: G05B 19/418, B25J 15/00, B25J 15/02, B25J 9/16, B25J 9/00

(54) **ROBOT GRIPPER FOR A TRANSFER SYSTEM FOR SETTING A PIECE IN A REQUIRED ORIENTATION**
ROBOTERGREIFER FÜR EIN TRANSFERSYSTEM ZUM EINSTELLEN EINES WERKSTÜCKS IN EINER ERFORDERLICHEN ORIENTIERUNG
ORGANE DE PRÉHENSION DESTINÉ À UN SYSTÈME DE TRANSFERT PERMETTANT DE DISPOSER UNE PIÈCE SELON UNE ORIENTATION EXIGÉE

(30) Priority: 10.03.2011 IT TO20110214
(43) Date of publication of application: 03.03.2021
(62) Divisional of application: 12717850.7
(73) Proprietor: Ferrero Trading Lux S.A., 2633 Senningerberg (LU)
(72) Inventor: FEMIA, Corrado, 2632 FINDEL (LU); NIGRA, Claudio, 10090 GASSINO (TO) (IT)
(74) Representative: Lovino, Paolo

(56) References cited:
- EP-A1- 0 613 841
- DE-A1- 2 623 732
- DE-A1- 3 730 236
- DE-U1- 9 011 340
- US-A- 5 429 375
- US-A1- 2010 094 453
- JONATHAN FRASER ET AL: "Theoretical and experimental analysis of an off-chip microgripper", CANADIAN JOURNAL OF ELECTRICAL AND COMPUTER ENGINEERING/REVUE CANADIENNE DE GENIE ELECTRIQUE AND INFORMATIQUE, ENGINEERING, USA, vol. 31, no. 2, 1 March 2006 (2006-03-01), pages 77-84, XP011145113, ISSN: 0840-8688

## Description

### TECHNICAL FIELD

The present invention relates to a robot gripper for a transfer system for setting a piece in a required orientation, according to the preamble of claim 1, which corresponds to DE3730236.

### PRIOR ART

Automated transfer systems are known that comprise a so-called singulator, i.e., a device that, starting from pieces heaped in bulk, forms an orderly flow of products that are then conveyed at a substantially constant pitch by a belt conveyor towards a subsequent machine or station, where operations of packaging and/or assembly and/or palleting are performed.

Automated transfer systems of a known type are scarcely satisfactory for pieces having a complex geometry in so far as the pieces set in a row on the belt conveyor have a random orientation in space that in general differs from one piece to the next. In other words, the pieces rest on the belt conveyor on any of their own faces, so that a manual intervention is necessary on the part of an operator in the station of arrival for setting the pieces in the required orientation.

Said diversity of orientation is found, for example, for pieces of toys or games made of plastic material that are to be inserted as surprises in packages of foodstuff products.

Furthermore, known transfer systems do not always manage to guarantee high rates of production, do not carry out quality control, and are particularly sensitive to processing waste and also to small variations of shape and dimensions in the pieces to be transferred. Said small variations, for example, can be due to the dimensional tolerances of previous moulding processes and/or to deformations of the plastic material, and are a cause of jamming and stoppages of the transfer systems and/or are a cause of rejects of the pieces.

In general, the singulator is defined by a vibration device or else by a mechanical device designed specifically for a particular shape of pieces. As the shape changes, the singulator must be replaced completely or must be modified substantially in its mechanical and electrical parts. Said adaptations entail a considerable expenditure in time and in general require a highly specialized labour force.

The patent No. EP1043642 describes a robotized system having an image-processing function, for picking up one piece at a time from a container where the pieces are accumulated randomly in bulk. Said system comprises a robot having a gripper supported by a wrist, that carries a sensor, for example a photographic machine for capturing images of the pieces.

DE3730236 discloses a gripping device having two gripping arms, which can be moved apart and towards one another by a gripping drive in order to grip a workpiece. Holding members are coupled respectively to the gripping arms and can be rotated by a rotary drive about a common axis, in order to turn the workpiece Publication "Theoretical and experimental analysis of an off-chip microgripper",JONATHAN FRASER ET AL: CANADIAN JOURNAL OF ELECTRICAL AND COMPUTER ENGINEERING/ REVUE CANADIENNE DE GENIE ELECTRIQUE AND INFORMATIQUE, ENGINEERING, 1 March 2006, describes the design of a single-crystal-silicon off-chip electrothermal microgripper for use in micro-assembly and biological applications. By determining the mechanical amplification in each stage of the microgripper, one can establish a relationship between thermal strain and the resulting jaw output. This device has a two-stage actuation mechanism, consisting of chevron actuators and then amplifiers. United States Patent US5429375 A, MUELLER GERALD E ET AL, 4 July 1995 describes a chucking apparatus which includes a chuck body mounting a first plurality of lock-up fingers and a second plurality of gripping fingers. wherein a two stage actuation mechanism is provided for initially deflecting the free ends of the lock-up fingers radially of the chuck body axis into releasable engagement with the inner chucking surface of aperipheral wall of a workpiece, for engaging and holding the workpiece in the predetermined lock up position prior to its being gripped by the gripping fingers.

### AIM OF THE INVENTION

The aim of the present invention is to provide a gripper for a transfer system for setting a piece in a required orientation that will enable a simple and economically advantageous solution of the problems set forth above.

According to the present invention, a gripper for a transfer system for setting a piece in a required orientation is provided, as defined in Claim 1.

### BRIEF DESCRIPTION OF THE DRAWINGS

The invention will now be described with reference to the annexed drawings, which illustrate a non-limiting example of embodiment thereof, and in which:
- Figure 1 is a perspective view of a transfer system for setting a piece in a required orientation, provided with a preferred embodiment of the gripper according to the present invention;
- Figure 2 shows the system of Figure 1 from a different standpoint and with parts represented schematically;

- Figure 3 illustrates the gripper of the present invention, at an enlarged scale;
- Figure 4 illustrates, from above and at an enlarged scale, a further particular of the system of Figure 1; and
- Figure 5 shows a variant of the particular of Figure 4.

### PREFERRED EMBODIMENTS OF THE INVENTION

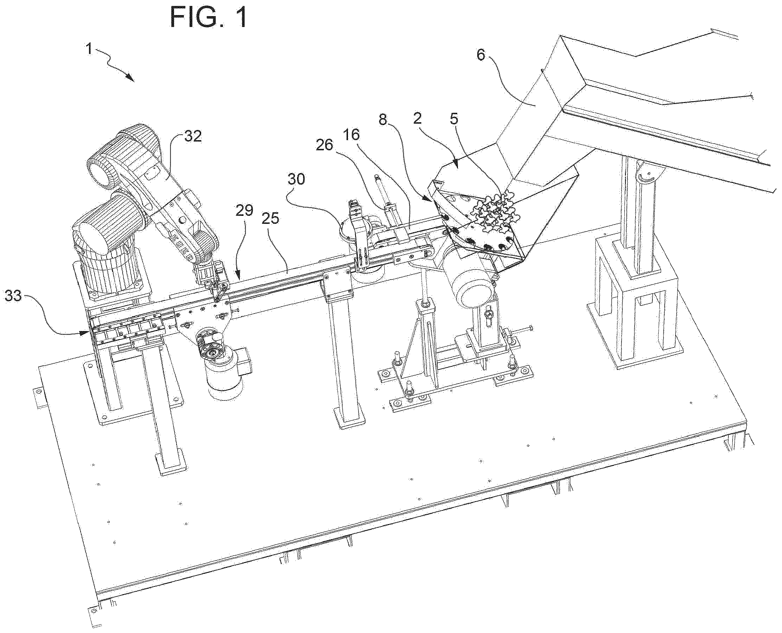

Designated by 1 in Figure 1 is a transfer system comprising a housing 2, open upwards and containing a heap of pieces 5 set in bulk. The pieces 5 are dropped into the housing 2, for example through a hopper 6, and are made to come out of the housing 2, still facing upwards, via a so-called singulator 8, i.e., a device that forms an orderly flow of pieces 5.

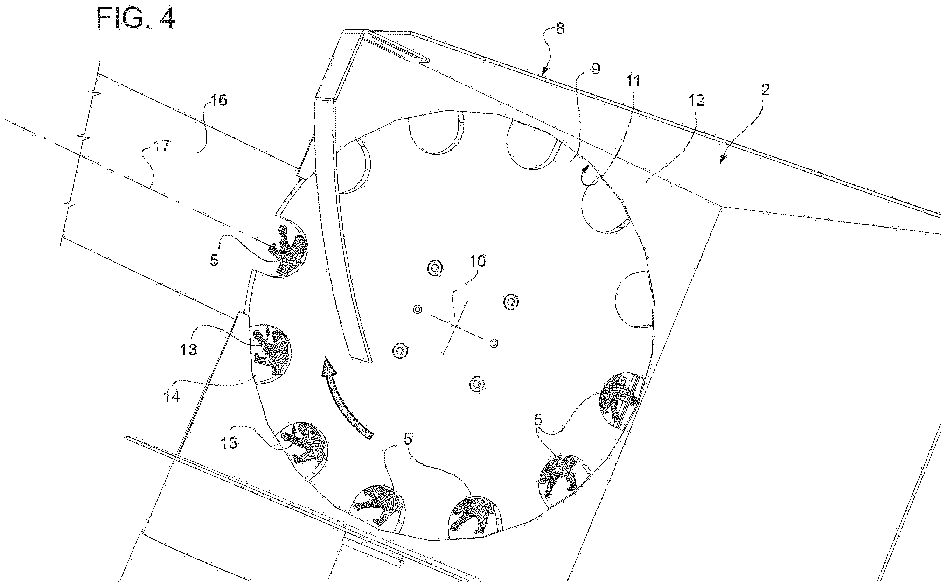

With reference to Figure 4, the singulator 8 comprises a hub (not visible) and a wheel 9, which is coaxially fixed on said hub along an axis 10. The hub is motor-driven for rotating axially, and the wheel 9 is housed in a circular seat 11 defined by a side 12 of the housing 2.

The side 12 and the wheel 9 define laterally a plurality of retention seats 13, which have dimensions and a shape such as to receive, each, a corresponding piece 5 during the passage in the heap of pieces 5 to the bottom of the housing 2. The seats 13 are closed at the rear by a wall 14, which is fixed with respect to the side 12 and is parallel to the wheel 9 and to the side 12. The wall 14, the wheel 9, and the side 12 are inclined with respect to the vertical so that the collected pieces 5 rest on the wall 14 and remain in the seats 13 during rotation towards the top dead centre. At top dead centre, the wall 14 has an opening, so that the pieces 5 drop from the respective seats 13 onto a conveyor 16, for example a belt conveyor, which is set underneath the wheel 9 and then conveys the pieces 5 in a row in a horizontal direction 17.

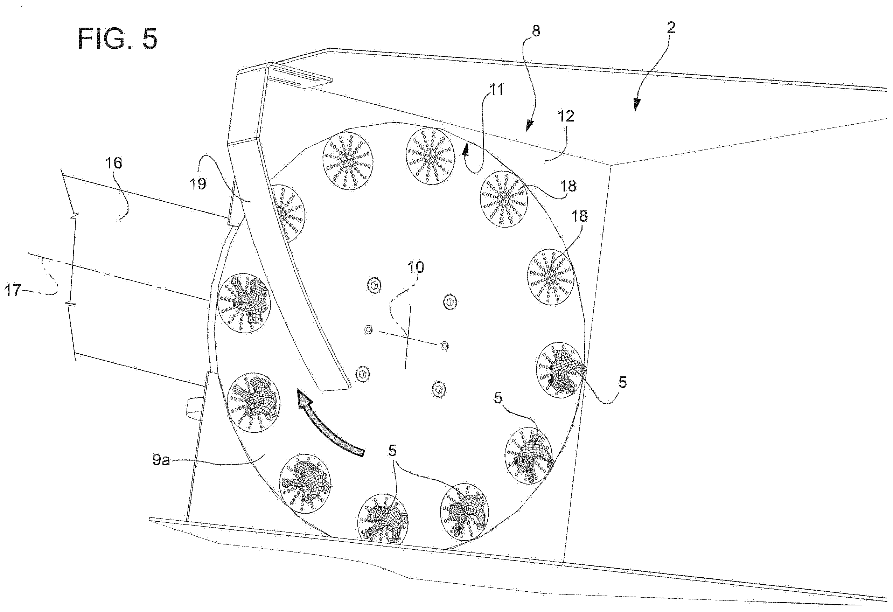

In the variant of Figure 5, the wheel 9 is replaced by a wheel 9a, which has, instead of the seats 13, a plurality of suction mouths 18 set along its own periphery. The suction mouths 18, behind the wheel 9a, are connected through respective tubes (not visible) to the motor-driven hub, which, in turn, communicates in a way not illustrated with a vacuum source. An elastic wall 19 is provided in a fixed position at the top end of the housing 2, immediately after the top dead centre of the wheel 9a, for detaching the pieces 5 and getting them to jump onto the conveyor 16 when the suction mouths 18 pass under the wall 19 during rotation. Preferably, the wheel 9a and the aforesaid tubes are interchangeable with the wheel 9 and the wall 14 so that is possible to use the seats 13 and the suction mouths 18 alternatively on one and the same singulator 8.

With reference to Figure 1, the system 1 further comprises a conveyor 25, parallel to and set alongside the conveyor 16, and a device 26 that transfers the pieces 5, one at a time from the conveyor 16 onto the conveyor 25.

The conveyor 25 is preferably of the belt type and defines a movable horizontal plane 29, on which the pieces 5 rest with a random spatial orientation, in general different from one piece to the next. The pitch between the pieces 5 depends upon the angular distance between the retention members of the wheels 9, 9a and is substantially constant, in the absence of rejects.

The system 1 further comprises a digital vision device 30, which is defined by a video camera or a photographic camera, is set above the plane 29, at a distance such as to have images in focus and capture at least one image for each of the pieces 5 that advance.

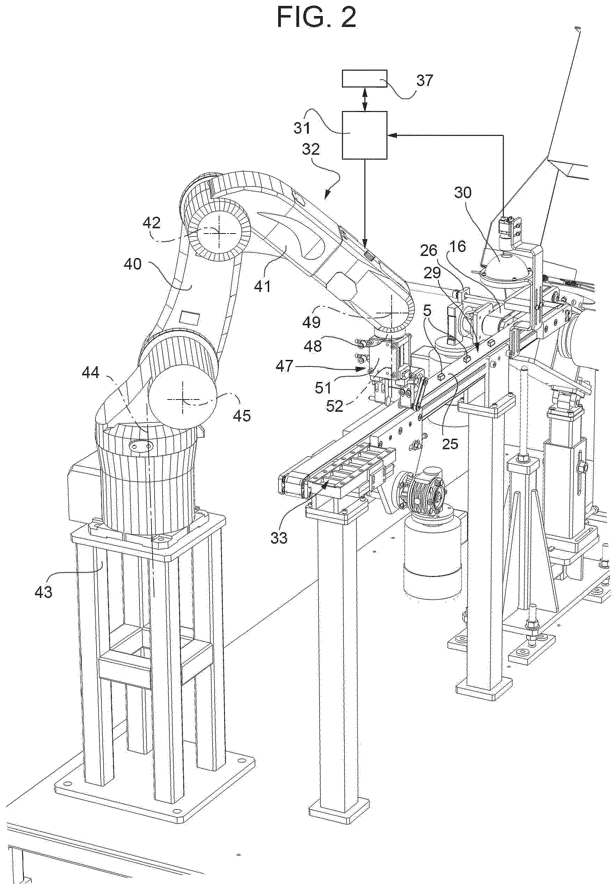

According to what is illustrated in Figure 2, the device 30 sends the data of the captured images to a control and command unit 31 (illustrated schematically), which controls a movement assembly 32 in a way synchronised with the speed of the conveyor 25. The assembly 32 grips one piece 5 at a time and places it in a station 33, defined for example by a temporary-deposit station, by an assembly station, or by a packaging station, where a pre-set spatial orientation is required. The assembly 32, under the command of the unit 31, turns each piece 5 about at least two mutually transverse axes during transfer from the plane 29 to the station 33 to obtain the required spatial orientation. In particular, the assembly 32 has characteristics such as to turn the pieces 5 about two mutually orthogonal axes, as will be described more fully in what follows.

The unit 31 is configured with algorithms that operate as a function of the data of the images captured by the device 30 and as a function of the outcome of a processing operation that compares the data of the captured images with the data of a set of images stored in a memory 37. The stored images represent at least one sample, which is similar to the piece 5 and is set in respective different stable resting positions, so that said images show the various orientations that are possible for the pieces 5 arriving on the plane 29. The processing performed by the unit 31 identifies, in the set of stored images, the one representing the sample with resting position closest to the one illustrated in the captured image, and, on the basis of the differences between the captured image, the identified image, and the final orientation to be obtained, the unit 31 automatically sets the optimal sequence and the angles of the rotations to be imparted to bring the piece 5 into the required spatial orientation.

Preferably, the unit 31 also sets the points of the piece 5 in which to carry out gripping, which is hence variable: on the basis of the geometry of the piece 5 and the orientation visible in the captured image, the algorithms enable the unit 31 to set automatically an ideal or optimal condition for gripping.

In the preferred embodiment illustrated in Figures 1 and 2, the assembly 32 is defined by an anthropomorphic robot, which comprises two arms 40, 41 hinged at one end about a horizontal axis 42. At the opposite end, the arm 40 is coupled to a base 43 so as to be able to rotate about a vertical axis 44 and about an axis 45 parallel to the axis 42, and the arm 41 is coupled to a gripper 47 via a wrist 48. In particular, the wrist 48 is coupled to the arm 41 so as to be able to rotate about an axis 49 parallel to the axis 42 and defines an articulated joint that enables the gripper 47 to rotate about an axis 52 orthogonal to the axis 49. The rotations about the axes 44, 45, 42, 49, 52 are performed by respective motors not described in detail, controlled by the unit 31. The unit 31 controls the motors correspondent to the axes 45, 42, 49 in order to keep the axis 52 vertical so that the gripper 47 takes and picks up the pieces 5 acting from above.

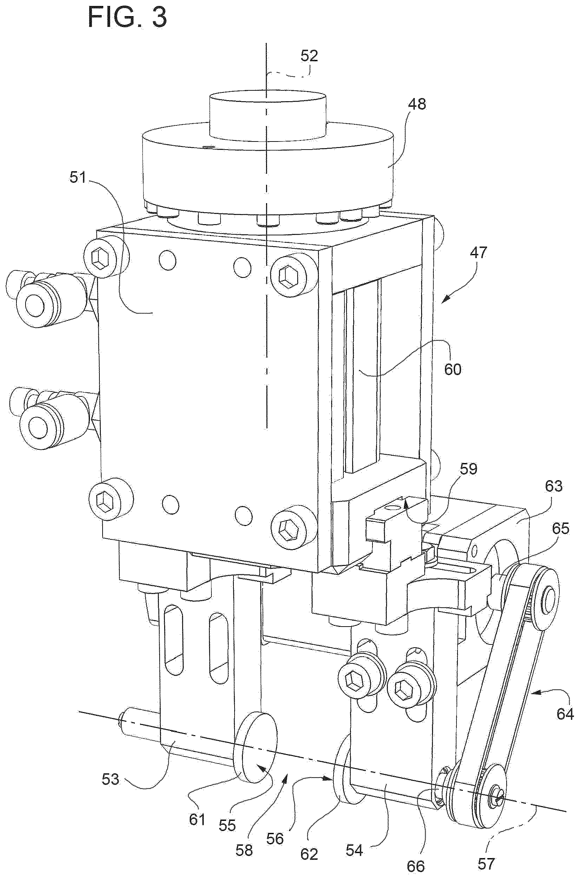

With reference to Figure 3, the gripper 47 comprises two fingers 53, 54, which carry respective surfaces 55, 56 coaxial along a longitudinal axis 57 orthogonal to the axis 52 and are coupled to the structure 51 so as to be able to approach/move away the surfaces 55, 56 longitudinally. In other words, the surfaces 55, 56 define an empty space 58 for housing a piece 5, with which they come into contact when they are brought up to one another. In particular, the fingers 53, 54 are coupled to a guide 59 of the structure 51 for translating parallel to the axis 57. The gripper 47 further comprises an actuator 60, in particular an electric actuator, which is coupled to the structure 51 and is controlled for displacing the fingers 53, 54 with respect to one another so as to grip/release the piece 5.

The surfaces 55, 56 are defined by respective disks 61, 62, which are rotatably coupled to the fingers 53, 54 about the axis 57. The disk 61 turns idle, whereas rotation of the disk 62 is driven by an actuator 63, fixed to the finger 54 and defined in particular by an electric motor. A belt transmission 64 transmits the rotation from an output shaft 65 of the actuator 63 to a pin 66, which is fixed and coaxial with respect to the surface 56, is parallel to the output shaft 65, and projects from the finger 54 towards the outside of the gripper 47, i.e. in a direction opposite to the space 58.

In use, after the piece 5 has been gripped between the surfaces 55, 56 in response to the operation of the actuator 60, the unit 31 controls the motors associated to the axes 44, 45, 42, 49 so as to pick up the piece 5 from the plane 29 and then transfer the piece 5 into the station 33. During transfer, the unit 31 controls the rotations about the axes 52 and 57 in response to the results of the comparisons of the captured and stored images so as to bring the piece 5 into the required final orientation. After reaching the station 33, the unit 31 issues a command to the actuator 60 to release the piece 5 and then brings the gripper 47 back above the conveyor 25 for gripping the next piece 5 and perform a new cycle.

According to a variant (not illustrated) defining the present invention, the actuator 60 conveniently comprises two actuation stages set in series that can be actuated independently of one another. The first stage is driven by the unit 31 for adjusting the axial width of the space 58 between the surfaces 55, 56 and thus adapt the gripper 47 to different dimensions of the pieces to be gripped. This adaptation is made at the start of each lot of equal pieces to be transferred. The second stage is driven by the unit 31 so as to carry out the effective movement of gripping/release.

According to a further variant (not illustrated), the gripper 47 is equipped with an additional gripping member with vertical axis, for example a suction pad.

According to a further variant (not illustrated), the system 1 comprises a plurality of transfer lines, which are set alongside one another, transfer components different from one another, and each comprise a corresponding singulator 8, a corresponding conveyor 25, and a corresponding device 30. One or more robots are set at the end of said lines in a station where the various components arriving, respectively, on the transfer lines are assembled together or packaged.

According to a further variant (not illustrated), the pieces conveyed by the conveyor 25 under the device 30 are different from one another. The unit 31 is configured with appropriate algorithms so as to recognize the type of the various pieces, in addition to recognizing their spatial orientation on the plane 29, on the basis of the captured images and of the comparison with the stored images.

From the foregoing it emerges clearly that the system 1 not only transfers the pieces 5, but orients them automatically in the required way. The system 1 does not need structural modifications to be able to transfer pieces having a different shape and/or different dimensions. In fact, automatic orientation of the pieces is obtained by a unit 31 that receives the data of the captured images and compares them automatically with the data stored corresponding to various possible orientations and to the required final orientation. When a lot of pieces with a different shape and/or different dimensions must be transferred, it is necessary to store the images of the various possible orientations of the new type of pieces, and a new setting of operating parameters in the algorithms of the unit 31 could be necessary, without any need for adjustment or replacement of mechanical parts. Programming of the unit 31 can be performed also remotely, for example via the Internet.

The images captured by the device 30 are used by the unit 31 in a known way to identify the co-ordinates of the position of each piece on the plane 29 so as to set the gripper 47 in the correct horizontal position during picking up, and can be exploited to carry out a quality control on the pieces 5 transferred.

The described system 1 can be used in sectors extremely different from one another and for different purposes, in which it is necessary to orient components randomly resting on a plane.

Also the singulator 8 is suited to conveying pieces of different shape and dimensions, provided that said dimensions fall within a maximum size range, thanks to the use of the seats 13 or of the suction mouths 18, without having to make modifications to the mechanical parts.

The characteristics of the gripper 47 and of the robot make it possible to prevent any sliding on the plane 29, to carry out just two rotations for setting each piece 5 in any required final orientation, and to carry out said rotations simultaneously, precisely during transfer of the piece 5 from the plane 29 to the station 33, hence saving time and encumbrance and preventing any friction.

In addition to obtaining fast transfer, the gripper 47 and the robot enable precision to be obtained for the position and for the orientation of the pieces 5 left in the station 33.

Finally, from the foregoing it emerges clearly that modifications and variations may be made to the gripper 47 described with reference to the attached figures, without thereby departing from the sphere of protection of the present invention, as defined in the annexed claims.

In particular, the fingers 53, 54 could present a motion of a rotary type with respect to the structure 51; and/or one of the fingers 53, 54 could be fixed with respect to the structure 51; and/or the surfaces 55, 56 could be defined by resting elements with a shape different from that of the disks 61, 62; and/or at least one of the disks 61, 62 could be provided with axial translation with respect to the corresponding finger 53, 54 (possibly with the fingers 53, 54 fixed with respect to the structure 51).

The movement assembly 32 could be defined by a robot of a type different from an anthropomorphic one, or else, instead of the robot, could comprise different equipment. For instance, the assembly 32 could comprise a table, which is rotary about a vertical axis and is provided with a gripper that picks up one piece at a time from the conveyor 25 and, via rotation of the table, transfers it into a different station, in which the piece is rotated, respectively, about different axes.

Moreover, the pieces 5 could be brought into the required final orientation via a different sequence of rotations.

In addition, the singulator 8 could be of a different type, for example of a traditional vibration type; and/or the device 30 could be set in another position: for example, it could be set alongside the conveyor 25 or else it could be carried directly by the gripper 47; or else the device 30 could be aimed on the plane 29, with a viewing direction inclined with respect to the vertical.

Furthermore, the pieces 5 could be randomly heaped in bulk on a relatively wide conveyor, instead of being conveyed in a row formed by the singulator 8; or else the device 30 could capture the images of the pieces 5 while the latter are stationary on the plane 29, instead of capturing them while they are moving.

Finally, the singulator 8 could be used for traditional transfer lines, without the device 30, the unit 31, or the assembly 32.

## Claims

1. A robot gripper for a transfer system for setting a piece in a required orientation, the gripper comprising:
- two fingers (53, 54) supporting respective gripping surfaces (55, 56), which are coaxial and movable with respect to one another along a longitudinal axis (57); and
- a first actuator (60) for approaching/moving away said gripping surfaces (55, 56) longitudinally;
wherein said gripping surfaces (55, 56) can turn about said longitudinal axis (57) with respect to said fingers (53, 54), and wherein the robot gripper further comprises a second actuator (63) for rotating one of said gripping surfaces (56) about said longitudinal axis (57);
**characterized in that** said first actuator (60) comprises two actuation stages that are set in series and can be operated independently of one another.

2. The robot gripper according to Claim 1, **characterized in that** said gripping surfaces (55, 56) are longitudinally fixed with respect to the corresponding fingers (53, 54), and said first actuator (60) drives the displacement of at least one of said fingers (53, 54).

3. A robot for setting a piece in a required orientation, the robot comprising:
- a gripper (47) according to anyone of the previous claims, for gripping said piece (5); the second actuator of said gripper defining first rotation means (63) for rotating said piece (5) about said longitudinal axis (57); and
- second rotation means (48) for rotating said piece (5) about a further axis (52) transverse to said longitudinal axis (57).

4. The robot according to Claim 3, wherein said robot comprises a wrist that supports said gripper and defines said second rotation means (48).

5. The robot according to Claim 3 or 4, wherein said longitudinal axis and further axis (57, 52) are orthogonal.

6. A transfer system for setting a piece in a required orientation, the system comprising:
- a resting plane;
- a vision device (30) for capturing at least one image of a piece (5) resting on said resting plane;
- a robot according to anyone of Claims 3 to 5;
- a conveyor (25) having a movable horizontal plane (29) for transferring a flow of said pieces; said resting plane being defined by said movable horizontal plane (29);
- control and command means that control said robot so as to:
o move said piece (5) away from said movable horizontal plane (29);
o rotate said piece (5) into the required orientation, after having moved it away from said movable horizontal plane (29), as a function of differences between the position of the piece in the captured image and the required orientation;
said control and command means comprising:
a) storage means (37) containing data of stored images representing at least one sample element, which is the same as said piece (5) and is set in respective different stable resting positions; and
b) processing means for comparing data of the captured image with the data of the stored images;
and said control and command means being configured to control the rotations about said longitudinal axis and further axis (57, 52) in response to the results of the comparisons of the captured and stored images so as to bring the piece (5) into the required orientation.

7. The system according to Claim 6, **characterized by** further comprising:
- a housing (2) for containing a heap of pieces in bulk;
- a singulator (8) for forming an orderly flow of pieces from said heap; and
- conveyor means (16, 26, 25) between said singulator (8) and said vision device (30); said conveyor means comprising said conveyor;
said singulator (8) comprising a motor-driven wheel (9;9a), which has, along its own periphery, a plurality of retention members for collecting and conveying respective said pieces;
said retention members being defined by retention seats (13) or else by suction mouths (18).

## Patentansprüche

1. Robotergreifer für ein Transfersystem zum Einstellen eines Teils in eine erforderliche Ausrichtung, wobei der Greifer aufweist:
- zwei Finger (53, 54), die entsprechende Greifflächen (55, 56) tragen, die entlang einer Längsachse (57) koaxial und bewegbar zueinander sind; und
- einen ersten Aktuator (60) zum Annähern/Wegbewegen der Greifflächen (55, 56) in Längsrichtung;
wobei sich die Greifflächen (55, 56) um die Längsachse (57) in Bezug auf die Finger (53, 54) drehen können, und wobei der Robotergreifer ferner einen zweiten Aktuator (63) zum Drehen einer der Greifflächen (56) um die Längsachse (57) aufweist;
**dadurch gekennzeichnet, dass** der erste Aktuator (60) zwei Betätigungsstufen aufweist, die in Reihe geschaltet sind und unabhängig voneinander betrieben werden können.

2. Robotergreifer nach Anspruch 1, **dadurch gekennzeichnet, dass** die Greifflächen (55, 56) in Bezug auf die entsprechenden Finger (53, 54) in Längsrichtung fixiert sind und der erste Aktuator (60) die Verschiebung von mindestens einem der Finger (53, 54) antreibt.

3. Roboter zum Einstellen eines Teils in eine erforderliche Ausrichtung, wobei der Roboter aufweist:
- einen Greifer (47) nach einem der vorhergehenden Ansprüche, zum Greifen des Teils (5); wobei der zweite Aktuator des Greifers erste Rotationsmittel (63) zum Drehen des Teils (5) um die Längsachse (57) definiert; und
- zweite Rotationsmittel (48) zum Drehen des Teils (5) um eine weitere Achse (52) quer zur Längsachse (57).

4. Roboter nach Anspruch 3, wobei der Roboter ein Handgelenk aufweist, das den Greifer trägt und das zweite Rotationsmittel (48) definiert.

5. Roboter nach Anspruch 3 oder 4, wobei die Längsachse und weitere Achsen (57, 52) orthogonal zueinander sind.

6. Transfersystem zum Einstellen eines Teils in eine erforderliche Ausrichtung, wobei das System aufweist:
- eine Ruheebene;
- eine Sichtvorrichtung (30) zum Erfassen mindestens eines Bildes eines Teils (5), das auf der Ruheebene ruht;
- einen Roboter nach einem der Ansprüche 3 bis 5;
- einen Förderer (25) mit einer bewegbaren horizontalen Ebene (29) zum Transportieren eines Stroms von Teilen; wobei die Ruheebene durch die bewegbare horizontale Ebene (29) definiert ist;
- Steuer- und Befehlsmittel, die den Roboter steuern, so dass:
- das Teil (5) von der bewegbaren horizontalen Ebene (29) wegbewegt wird;
- das Teil (5) in die erforderliche Ausrichtung gedreht wird, nachdem dieses von der bewegbaren horizontalen Ebene (29) wegbewegt wurde, als eine Funktion von Differenzen zwischen der Position des Teils in dem erfassten Bild und der erforderlichen Ausrichtung;
wobei die Steuer- und Befehlsmittel aufweisen:
a) Speichermittel (37), die Daten von gespeicherten Bildern enthalten, die mindestens ein Probenelement darstellen, welches dasselbe ist wie das Teil (5) und in jeweils unterschiedliche stabile Ruhepositionen eingestellt wird; und
b) Verarbeitungsmittel zum Vergleichen von Daten des erfassten Bildes mit den Daten der gespeicherten Bilder;
und wobei die Steuer- und Befehlsmittel konfiguriert sind, die Drehungen um die Längsachse und weitere Achsen (57, 52) in Reaktion auf die Ergebnisse der Vergleiche der erfassten und gespeicherten Bilder zu steuern, um das Teil (5) in die erforderliche Ausrichtung zu bringen.

7. System nach Anspruch 6, gekennzeichnet ferner aufzuweisen:
- ein Gehäuse (2) zur Aufnahme eines Haufens von Teilen in loser Schüttung;
- einen Vereinzeler (8) zum Bilden eines geordneten Flusses von Teilen aus dem Haufen; und
- Fördermittel (16, 26, 25) zwischen dem Vereinzeler (8) und der Sichtvorrichtung (30); wobei die Fördermittel den Förderer aufweisen;
wobei der Vereinzeler (8) ein motorgetriebenes Rad (9; 9a) aufweist, das entlang dessen eigenen Umfangs eine Vielzahl Rückhalteelemente zum Sammeln und Fördern der jeweiligen Stücke aufweist; wobei die Rückhalteelemente durch Rückhaltesitze (13) oder durch Saugöffnungen (18) definiert sind.

## Revendications

1. Organe de préhension de robot pour un système de transfert permettant de disposer une pièce selon une orientation requise, l'organe de préhension comprenant :
- deux doigts (53, 54) supportant des surfaces de préhension respectives (55, 56), qui sont coaxiales et mobiles l'une par rapport à l'autre le long d'un axe longitudinal (57) ; et
- un premier actionneur (60) permettant d'approcher/éloigner de manière longitudinale lesdites surfaces de préhension (55, 56) ;
dans lequel lesdites surfaces de préhension (55, 56) peuvent tourner autour dudit axe longitudinal (57) par rapport auxdits doigts (53, 54), et dans lequel l'organe de préhension de robot comprend en outre un second actionneur (63) permettant de faire tourner une parmi lesdites surfaces de préhension (56) autour dudit axe longitudinal (57) ;
**caractérisé en ce que** ledit premier actionneur (60) comprend deux étages d'actionnement qui sont disposés en série et peuvent être mis en fonctionnement indépendamment l'un par rapport à l'autre.

2. Organe de préhension de robot selon la revendication 1, **caractérisé en ce que** lesdites surfaces de préhension (55, 56) sont fixes de manière longitudinale par rapport aux doigts correspondants (53, 54), et ledit premier actionneur (60) entraîne le déplacement d'au moins un parmi lesdits doigts (53, 54).

3. Robot permettant de disposer une pièce selon une orientation requise, le robot comprenant :
- un organe de préhension (47) selon l'une quelconque des revendications précédentes, permettant la préhension de ladite pièce (5) ; le second actionneur dudit organe de préhension définissant un premier moyen de rotation (63) permettant de faire tourner ladite pièce (5) autour dudit axe longitudinal (57) ; et
- un second moyen de rotation (48) permettant de faire tourner ladite pièce (5) autour d'un autre axe (52) transversal audit axe longitudinal (57).

4. Robot selon la revendication 3, dans lequel ledit robot comprend un poignet qui supporte ledit organe de préhension et définit ledit second moyen de rotation (48).

5. Robot selon la revendication 3 ou 4, dans lequel ledit axe longitudinal et l'autre axe (57, 52) sont orthogonaux.

6. Système de transfert permettant de disposer une pièce selon une orientation requise, le système comprenant :
- un plan d'appui ;
- un dispositif de vision (30) permettant de capturer au moins une image d'une pièce (5) appuyée sur ledit plan d'appui ;
- un robot selon l'une quelconque des revendications 3 à 5 ;
- un convoyeur (25) ayant un plan horizontal mobile (29) permettant de transférer un flux desdites pièces ; ledit plan d'appui étant défini par ledit plan horizontal mobile (29) ;
- des moyens de contrôle et de commande qui contrôlent ledit robot de manière à :
-- éloigner ladite pièce (5) dudit plan horizontal mobile (29) ;
-- faire tourner ladite pièce (5) dans l'orientation requise, après l'avoir éloignée dudit plan horizontal mobile (29), en fonction des différences entre la position de la pièce dans l'image capturée et l'orientation requise ;
lesdits moyens de contrôle et de commande comprenant :
a) un moyen de stockage (37) contenant des données d'images stockées représentant au moins un élément échantillon, qui est le même que ladite pièce (5) et est disposé dans différentes positions d'appui stables respectives ; et
b) un moyen de traitement permettant de comparer des données de l'image capturée avec les données des images stockées ;
et lesdits moyens de contrôle et de commande étant configurés pour contrôler les rotations autour dudit axe longitudinal et de l'autre axe (57, 52) en réponse aux résultats des comparaisons des images capturées et stockées afin d'amener la pièce (5) dans l'orientation requise.

7. Système selon la revendication 6, **caractérisé en ce qu'**il comprend en outre :
- un boîtier (2) permettant de contenir un tas de pièces en vrac ;
- un séparateur (8) permettant de former un flux ordonné de pièces à partir à partir dudit tas ; et
- des moyens convoyeurs (16, 26, 25) entre ledit séparateur (8) et ledit dispositif de vision (30) ; lesdits moyens convoyeurs comprenant ledit convoyeur ;
ledit séparateur (8) comprenant une roue entraînée par moteur (9 ; 9a), qui a, le long de sa propre périphérie, une pluralité d'éléments de retenue permettant la collecte et le convoyage desdites pièces respectives ;
lesdits éléments de retenue étant définis par des sièges de retenue (13) ou bien par des bouches d'aspiration (18).
